(19) Europäisches Patentamt
European Patent Office
Office européen des brevets

(11) **EP 2 080 937 B1**

## (12) EUROPEAN PATENT SPECIFICATION

(45) Date of publication and mention
of the grant of the patent:
**27.02.2013 Bulletin 2013/09**

(51) Int Cl.:
**F16H 61/28** *(2006.01)*    **F16H 61/00** *(2006.01)*

(21) Application number: **09150529.7**

(22) Date of filing: **14.01.2009**

(54) **Hydraulic control circuit of vehicular  synchromesh transmission**

Hydraulische Steuerschaltung eines Fahrzeugsynchrongetriebes

Circuit de contrôle hydraulique de transmission à synchroniseur de véhicule

(84) Designated Contracting States:
**DE FR GB IT**

(30) Priority: **15.01.2008   JP 2008006324**

(43) Date of publication of application:
**22.07.2009   Bulletin 2009/30**

(73) Proprietor: **TOYOTA JIDOSHA KABUSHIKI
KAISHA
Toyota-shi,
Aichi-ken, 471-8571 (JP)**

(72) Inventor: **Ido, Daisuke
Toyota-shi
Aichi 471-8571 (JP)**

(74) Representative: **TBK
Bavariaring 4-6
80336 München (DE)**

(56) References cited:
**EP-A2- 0 412 505      GB-A- 2 367 866
JP-A- 2004 293 704**

## Description

BACKGROUND OF THE INVENTION

1. Field of the Invention

The invention relates to a hydraulic control circuit of a vehicular synchromesh transmission, which includes synchromesh devices used for shift control of the vehicle, and a hydraulic shift actuator that operates the synchromesh devices.

2. Description of the Related Art

As one type of transmissions for vehicles, a vehicular synchromesh transmission is known which is shifted from one gear position to another gear position through engagement of a selected one of synchromesh devices (synchromesh clutches) operated or actuated by a hydraulic shift actuator. The synchromesh devices are provided for a plurality of pairs of gears, respectively, which are mounted on two parallel shafts and have different gear ratios. The vehicular synchromesh transmission of this type is usually provided with an automatic clutch that is automatically engaged or released by an actuator, such as a hydraulic cylinder. An example of a hydraulic control system for the transmission is described in Japanese Patent Application Publication No. 2004-293704 (JP-A-2004-293704).

Upon shifting of the transmission as described above, control for carrying out a series of operations for shifting as described below is performed. Initially, the automatic clutch is released while the throttle opening is controlled to a reduced value, and then the synchromesh device provided on a pair of gears corresponding to the speed ratio (gear ratio) that has been established is disengaged or released by the hydraulic shift actuator. Then, while all of the synchromesh devices provided for each pair of gears are in unengaged or neutral conditions, a hydraulic selector actuator performs a selecting operation to select a pair of gears corresponding to the speed ratio of the requested gear position, namely, the speed ratio to be achieved after the shifting, and one of the synchromesh devices that is pressed by the hydraulic actuator starts a rotating, synchronizing operation. Upon completion of the rotating, synchronizing operation, the synchromesh device is further pushed in by the hydraulic shift actuator, to be finally engaged. When completion of engagement of the synchromesh device, or completion of synchronization, is determined, the automatic clutch is engaged, and the original throttle opening is resumed.

In the vehicular synchromesh transmission as described above, it is inherently desired to reduce the shift time or period to be as short as possible. In the above-described series of shifting operations performed during shifting, the vehicle is caused to coast during a period in which the automatic clutch is released and no power is transmitted via the clutch; therefore, as the time required for shifting from one gear position to another increases, the driver is more likely to feel the vehicle running with no load or at idle, and shift shock arising upon re-engagement of the automatic clutch increases. Also, the driver feels deceleration of the vehicle, particularly on an uphill, and the shift feeling may deteriorate.

In the vehicular synchromesh transmission as described above, it is desired to reduce the hydraulic pressure applied to the hydraulic shift actuator when the synchromesh device performs a synchronizing operation or is engaged for shifting, namely, the shifting force of the hydraulic shift actuator, to be as small as possible. This is because wear on the synchromesh device, which would occur during the synchronizing operation or engagement, needs to be suppressed, and its durability needs to be improved.

To meet with the above-described demands, it is proposed to control the hydraulic pressure supplied to the shift actuator by means of a solenoid-operated control valve, so that the hydraulic pressure is increased to be as high as possible when the synchromesh device that has been engaged is released upon shifting or switching of the gear positions, and so that the hydraulic pressure is reduced to a specified level (corresponding to the permissible load) during the synchronizing operation or engagement of the synchromesh device so as to suppress or prevent the wear on the synchromesh device. The regulation of the hydraulic pressure to the specified level may be accomplished by feedback control of the solenoid-operated control valve. However, where the shift time or period is to be further reduced in the future, the feedback control of the solenoid-operated control valve alone cannot make the pressure quickly regulated to the specified level, because of an influence of, for example; a response delay.

SUMMARY OF THE INVENTION

The present invention has been developed in view of the above situations, and provides a hydraulic control circuit of a vehicular synchromesh transmission, which is able to generate, without delay, a hydraulic pressure having an appropriate level to a shift actuator when a synchromesh device that has been in a neutral condition starts a synchronizing operation for engagement thereof.

According to one aspect of the invention, there is provided a hydraulic control circuit of a vehicular synchromesh transmission, including a plurality of synchromesh devices provided for a plurality of pairs of gears having different gear ratios, respectively, and selectively engaged so as to establish a selected one of gear positions, and a hydraulic shift actuator operable on a shift stroke to engage one of the synchromesh devices that is in a non-engaged condition, after disengaging one of the synchromesh devices that is in an engaged condition, into a neutral condition, which comprises: (a) a main control valve operable to supply a hydraulic pressure to the hydraulic shift actuator until one of the above-indicated plurality of synchromesh devices is disengaged and placed in a neutral condition, the main control valve being adapted to shut off supply of the hydraulic pressure before engagement of one of the synchromesh devices is started, and (b) an accumulator provided in a first oil channel between the main control valve and the hydraulic shift actuator and operable to accumulate the hydraulic pressure supplied from the main control valve while storing a specified amount of hydraulic fluid, the accumulator being adapted to supply the stored hydraulic fluid to the hydraulic shift actuator after the main control valve shuts off the supply of the hydraulic pressure.

In the hydraulic control circuit of the vehicular synchromesh transmission, which includes a plurality of synchromesh devices provided for a plurality of pairs of gears having different gear ratios, respectively, and selectively engaged so as to establish a selected one of gear positions, and a hydraulic shift actuator operable on a shift stroke to engage one of the synchromesh devices that is in a non-engaged condition, after disengaging one of the synchromesh devices that is in an engaged condition, into a neutral condition, the hydraulic control circuit includes: (a) a main control valve operable to supply a hydraulic pressure to the hydraulic shift actuator until one of the above-indicated plurality of synchromesh devices is disengaged and placed in a neutral condition, the main control valve being adapted to shut off supply of the hydraulic pressure before engagement of one of the synchromesh devices is started, and (b) an accumulator provided in a first oil channel between the main control valve and the hydraulic shift actuator and operable to accumulate the hydraulic pressure supplied from the main control valve while storing a specified amount of hydraulic fluid, the accumulator being adapted to supply the stored hydraulic fluid to the hydraulic shift actuator after the main control valve shuts off the supply of the hydraulic pressure. With this arrangement, the hydraulic pressure is supplied from the accumulator to the hydraulic shift actuator after the main control valve shuts off supply of the hydraulic pressure to the hydraulic shift actuator, and the hydraulic pressure supplied from the accumulator decreases in accordance with the amount of the hydraulic fluid supplied from the accumulator; therefore, when the synchromesh device that has been in a neutral condition starts a synchronizing operation, the hydraulic pressure having an appropriate level can be generated to the shift actuator without delay. In sum, the present invention achieves reduction of the hydraulic pressure, and reduction of the operating speed of the shift actuator, i.e., alleviation of an impact on the synchromesh device upon engagement thereof.

In the hydraulic control circuit according to the above-indicated one aspect of the invention, it is preferable that (a) the hydraulic shift actuator is a double-acting hydraulic cylinder having a cylinder body, a piston slidably fitted in the cylinder body, a rod that is joined at one end to the piston and protrudes from the cylinder body to the outside, and first oil chamber and second oil chamber formed on opposite sides of the piston within the cylinder body such that a part of the rod is located in the first oil chamber, (b) a stroke sensor is further provided for detecting an operating amount or operating position of the hydraulic cylinder, and (c) the main control valve shuts off supply of the hydraulic pressure to the hydraulic shift actuator when the hydraulic shift actuator is placed at a predetermined operating position, based on the operating amount or operating position detected by the stroke sensor.

In the hydraulic control circuit of the vehicular synchromesh transmission as described above, (a) the hydraulic shift actuator is a double-acting hydraulic cylinder having a cylinder body, a piston slidably fitted in the cylinder body, a rod that is joined at one end to the piston and protrudes from the cylinder body to the outside, and first oil chamber and second oil chamber formed on opposite sides of the piston within the cylinder body such that a part of the rod is located in the first oil chamber, (b) a stroke sensor is further provided for detecting an operating amount or operating position of the hydraulic cylinder, and (c) the main control valve shuts off supply of the hydraulic pressure to the hydraulic shift actuator when the hydraulic shift actuator is placed at a predetermined operating position, based on the operating amount or operating position detected by the stroke sensor. With this arrangement, after the main control valve shuts off supply of the hydraulic pressure to the hydraulic cylinder serving as the hydraulic shift actuator when the hydraulic shift actuator is placed at the predetermined operating position, the hydraulic pressure is supplied from the accumulator to the hydraulic cylinder, and the hydraulic pressure supplied from the accumulator decreases in accordance with the amount of the hydraulic fluid supplied therefrom. Therefore, when the synchromesh device that has been in a neutral condition starts a synchronizing operation, the hydraulic pressure having an appropriate level can be generated to the hydraulic cylinder without delay.

In the hydraulic control circuit as described above, it is preferable that (a) the first oil channel is connected to a first oil chamber of the hydraulic shift actuator, (b) a second oil channel that diverges from the first oil channel is connected to a second oil chamber of the hydraulic shift actuator, (c) a switching control valve is further provided in the second oil channel, the switching control valve being placed in a selected one of a first position in which the second oil chamber is connected to the first oil channel, a second position in which the second oil chamber is disconnected from the first oil channel, and a third position in which the second oil chamber is connected to a drain channel, and (d) a first pressure-receiving area of one face of the piston which faces the first oil chamber is substantially equal to one half of a second pressure-receiving area of the other face of the piston which faces the second oil chamber.

In the hydraulic control circuit of the vehicular synchromesh transmission as described above, (a) the first oil channel is connected to a first oil chamber of the hydraulic shift actuator, (b) a second oil channel that diverges from the first oil channel is connected to a second oil chamber of the hydraulic shift actuator, (c) a switching control valve is further provided in the second oil channel, the switching control valve being placed in a selected one of a first position in which the second oil chamber is connected to the first oil channel, a second position in which the second oil chamber is disconnected from the first oil channel, and a third position in which the second oil chamber is connected to a drain channel, and (d) a first pressure-receiving area of one face of the piston which faces the first oil chamber is substantially equal to one half of a second pressure-receiving area of the other face of the piston which faces the second oil chamber. With this arrangement, when the hydraulic fluid is supplied from the hydraulic pressure source, or the accumulator, after the main control valve shuts off supply of the hydraulic pressure to the hydraulic shift actuator, the same hydraulic pressure is obtained if the operating stroke of the hydraulic shift actuator is the same, irrespective of which (forward or backward) direction in which the hydraulic cylinder is operated, i.e., which direction in which the piston of the hydraulic cylinder is moved. Accordingly, the control of the main control valve is advantageously simplified. Namely, even if the amount of the hydraulic fluid supplied from the accumulator is constant after the main control valve shuts off supply of the hydraulic pressure to the hydraulic cylinder, the hydraulic cylinder can be appropriately operated in either of the above two directions.

In the hydraulic control circuit according to the above-indicated one aspect of the invention, the accumulator is preferably a spring loaded accumulator having a container-like main body, an accumulator piston that is slidably fitted in the main body and forms a variable-volume oil chamber, and a spring that exerts spring force on the accumulator piston to bias the accumulator piston toward the oil chamber.

In the hydraulic control circuit of the vehicular synchromesh transmission as described above, the accumulator is a spring loaded accumulator having a container-like main body, an accumulator piston that is slidably fitted in the main body and forms a variable-volume oil chamber, and a spring that exerts spring force on the accumulator piston to bias the accumulator piston toward the oil chamber. Since the hydraulic pressure accumulated in the spring loaded accumulator and the amount of the hydraulic fluid stored in the accumulator are determined by the characteristics of the spring, the accumulator is easily designed.

In the hydraulic control circuit as described above, it is preferable that (a) each of the above-indicated plurality of pairs of gears comprises a first gear mounted on one of two parallel shafts to be rotatable relative to the one of two parallel shafts, and a second gear mounted on the other of the two parallel shafts such that the second gear cannot rotate relative to the other of the two parallel shafts, (b) each of the synchromesh devices includes engaging teeth comprising outer teeth formed integrally on the first gear, a hub fixed to one of the two parallel shafts, a cylindrical engaging sleeve having inner teeth that mesh with outer teeth of the hub and adapted to be operated by the hydraulic shift actuator in an axial direction of the above one of the two parallel shafts, and a synchronizer ring adapted to contact with the inner teeth of the engaging sleeve so as to inhibit movement of the engaging sleeve until a rotational speed of the engaging teeth becomes equal to that of the engaging sleeve, during movement of the engaging sleeve toward the engaging teeth, and (c) the compliance that is represented by a value obtained by dividing the volume of the hydraulic fluid flowing into or out of the spring loaded accumulator by a difference between pressures measured before and after the hydraulic fluid flows into or out of the accumulator is set to a value obtained, upon shifting of the transmission, by dividing an amount of oil consumed from the time when the hydraulic shift actuator is placed at a predetermined operating position to the time when a synchronizing operation is started, by a pressure difference between a first oil pressure supplied to the hydraulic shift actuator when the shift actuator operates the engaging sleeve so as to release the synchromesh device that has been engaged to establish a gear position before the shifting, and a second oil pressure supplied to the hydraulic shift actuator when the synchronizer ring of the synchromesh device associated with a gear position to be established after the shifting starts the synchronizing operation so as to engage the synchromesh device.

In the hydraulic control circuit of the vehicular synchromesh transmission as described above, (a) each of the above-indicated plurality of pairs of gears comprises a first gear mounted on one of two parallel shafts to be rotatable relative to the one of two parallel shafts, and a second gear mounted on the other of the two parallel shafts such that the second gear cannot rotate relative to the other of the two parallel shafts, (b) each of the synchromesh devices includes engaging teeth comprising outer teeth formed integrally on the first gear, a hub fixed to one of the two parallel shafts, a cylindrical engaging sleeve having inner teeth that mesh with outer teeth of the hub and adapted to be operated by the hydraulic shift actuator in an axial direction of the above one of the two parallel shafts, and a synchronizer ring adapted to contact with the inner teeth of the engaging sleeve so as to inhibit movement of the engaging sleeve until a rotational speed of the engaging teeth becomes equal to that of the engaging sleeve, during movement of the engaging sleeve toward the engaging teeth, and (c) the compliance that is represented by a value obtained by dividing the volume of the hydraulic fluid flowing into or out of the spring loaded accumulator by a difference between pressures measured before and after the hydraulic fluid flows into or out of the accumulator is set to a value obtained, upon shifting of the transmission, by dividing an amount of oil consumed from the time when the hydraulic shift actuator is placed at a predetermined operating position to the time when a synchronizing operation is started, by a pressure difference between a first oil pressure supplied to the hydraulic shift actuator when the shift actuator operates the engaging sleeve so as to release the synchromesh device that has been engaged to establish a gear position before the shifting, and a second oil pressure supplied to the hydraulic shift actuator when the synchronizer ring of the synchromesh device associated with a gear position to be established after the shifting starts the synchronizing operation so as to engage the synchromesh device. With this arrangement, after the main control valve is shut off, namely, after supply of the hydraulic pressure from the main control valve is interrupted or stopped, the hydraulic pressure is supplied from the accumulator to the hydraulic shift actuator, and the hydraulic pressure thus supplied naturally decreases to a preset target value, in accordance with the amount of the hydraulic fluid supplied from the accumulator. Thus, the hydraulic pressure is further appropriately generated and applied to the hydraulic shift actuator without delay when the engaging sleeve of the synchromesh device that has been in a neutral condition starts pressing the synchronizing clutch, namely, when the synchromesh device starts a synchronizing operation.

In the hydraulic control circuit as described above, it is preferable that the predetermined operating position is a position on a shift stroke of the synchromesh device at which the synchromesh device is disengaged and placed in a neutral condition.

In the hydraulic control circuit of the vehicular synchromesh transmission as described above, the predetermined operating position is a position on a shift stroke of the synchromesh device at which the synchromesh device is disengaged and placed in a neutral condition. Therefore, after the main control valve shuts off supply of the hydraulic pressure to the hydraulic shift cylinder, namely, after the synchromesh device is placed in a neutral condition, the hydraulic pressure is supplied from the accumulator to the hydraulic shift actuator, and the hydraulic pressure thus supplied naturally decreases to a preset target value, in accordance with the amount of the hydraulic fluid supplied from the accumulator. Thus, the hydraulic pressure is further appropriately generated and applied to the hydraulic shift actuator without delay when the engaging sleeve of the synchromesh device that has been in a neutral condition starts pressing the synchronizing clutch, namely, when the synchromesh device starts a synchronizing operation.

To effect shifting of the vehicular synchromesh transmission of the invention, a shift determination may be made (i.e., a gear position to which the transmission is to be shifted may be determined), based on the actual vehicle speed and the amount of operation of the accelerator pedal, from a pre-stored relationship (in the form of a map or shift diagram) using the vehicle speed and the accelerator operation amount as parameters, and the hydraulic control circuit may be operated so as to establish the gear position thus determined. In another example, a lever type or switch type shift command device may be provided, and the hydraulic control circuit may be operated so as to establish a gear position corresponding to the position to which the shift command device is operated.

The invention may be favorably applied to various types of vehicles, such as an engine drive vehicle that generates power through combustion of fuel, electric vehicle that runs by means of an electric motor, and a hybrid vehicle having two or more power sources.

BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

FIG. 1 is a skeleton diagram useful for explaining the general construction of a vehicular drive system in which a hydraulic control circuit according to one embodiment of the invention is used;
FIG. 2 is a view showing the structure of an automatic clutch included in the vehicular drive system of FIG. 1;
FIG. 3A and FIG. 3B are views useful for specifically explaining the construction and operation of a synchromesh clutch of a transmission included in the vehicular drive system of FIG. 1, which views show an unengaged condition, or neutral condition, of the synchromesh clutch;
FIG. 4A and FIG. 4B are views useful for specifically explaining the construction and operation of the synchromesh clutch of the transmission included in the vehicular drive system of FIG. 1, which views show an engaged condition of the synchromesh clutch;
FIG. 5 is a circuit diagram showing a hydraulic control circuit that controls hydraulic pressures supplied to a clutch release cylinder, selector cylinder and a shift cylinder;
FIG. 6 is a view of a part of the hydraulic control circuit of FIG. 5, showing a condition in which a rod (piston) of the shift cylinder is moved toward a second oil chamber;
FIG. 7 is a view of a part of the hydraulic control circuit of FIG. 5, showing a condition in which the rod (piston) of the shift cylinder is moved toward a first oil chamber;
FIG. 8 is a view of a part of the hydraulic control circuit of FIG. 5, showing a condition in which a synchronizer ring of a synchromesh device that is to be engaged to establish a gear position after shifting starts a synchronizing operation; and

FIG. 9 is a time chart explaining the operation of the hydraulic control circuit in a shift period.

## DETAILED DESCRIPTION OF EMBODIMENTS

One embodiment of the invention will be described in detail with reference to the drawings. In the embodiment as described below, parts or components shown in the drawings are simplified or modified as needed, and are not necessarily depicted with accuracy in terms of the relative proportion of the dimensions of the parts, their shapes, and so forth.

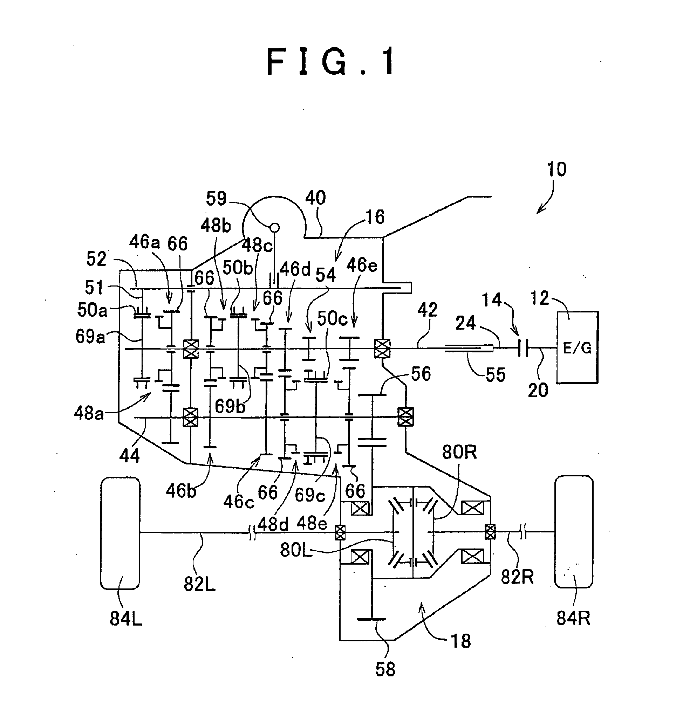

FIG. 1 is a skeleton diagram useful for explaining the general construction of a vehicular drive system 10 to which the present invention is applied. The vehicular drive system 10 is adapted for a FF (front-engine, front-drive) vehicle, and includes an engine 12 as a driving source for running the vehicle, an automatic clutch 14, a transmission (synchromesh transmission) 16, and a differential gear unit 18.

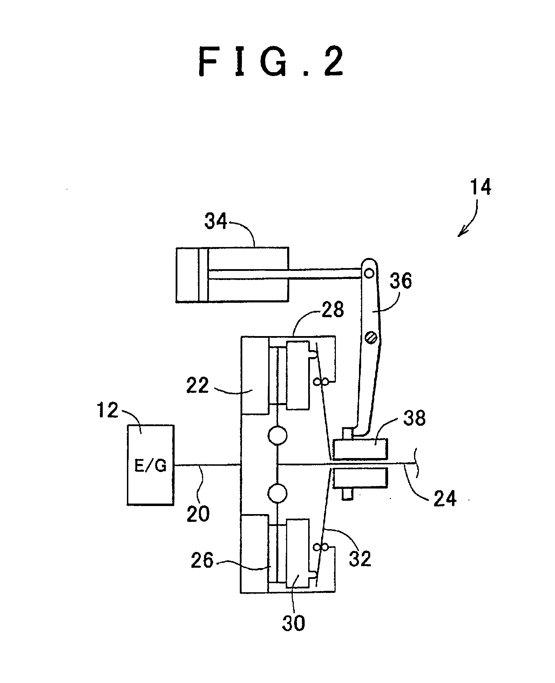

The automatic clutch 14 is, for example, a dry single-plate friction clutch as shown in FIG. 2, and includes a flywheel 22 mounted on a crankshaft 20 of the engine 12, a clutch disc 26 installed on a clutch output shaft 24, and a pressure plate 30 installed on a clutch cover 28. The automatic clutch 14 further includes a diaphragm spring 32 that biases the pressure plate 30 toward the flywheel 22 so as to sandwich the clutch disc 26 under pressure between the plate 30 and the flywheel 22 for power transmission, and a release sleeve 38 adapted to be moved leftward in FIG. 2 by a release fork 36 actuated by a clutch release cylinder 34, so as to displace the inner end portion of the diaphragm spring 32 leftward in FIG. 2 to release (or disengage) the clutch 14. The clutch release cylinder 34 functions as a clutch actuator for releasing or engaging the automatic clutch 14.

Referring back to FIG. 1, the transmission 16 is installed, along with the differential gear unit 18, in a common housing 40, to provide a transaxle, such that the transmission 16 and the differential gear unit 18 are immersed in and lubricated by lubricating oil contained in a certain amount in the housing 40. The transmission 16 is a so-called constant mesh type parallel-shaft transmission, and a plurality of pairs of shift gears (gear pairs) 46a - 46e having different gear ratios are installed between two parallel shafts, namely, an input shaft 42 and an output shaft 44. Each of the shift gear pairs 46a - 46e consists of a first gear mounted on one of the two parallel shafts to be rotatable relative to the shaft, and a second gear mounted on the other of the two shafts such that it cannot rotate relative to the other shaft. The transmission 16 is further provided with a two-shaft mesh type transmission mechanism having a plurality of synchromesh clutches (synchromesh devices) 48a - 48e for coupling gears to be synchronized, i.e., the first gears, of the shift gear pairs 46a - 46e, selectively to the first shaft 42 or the output shaft 44.

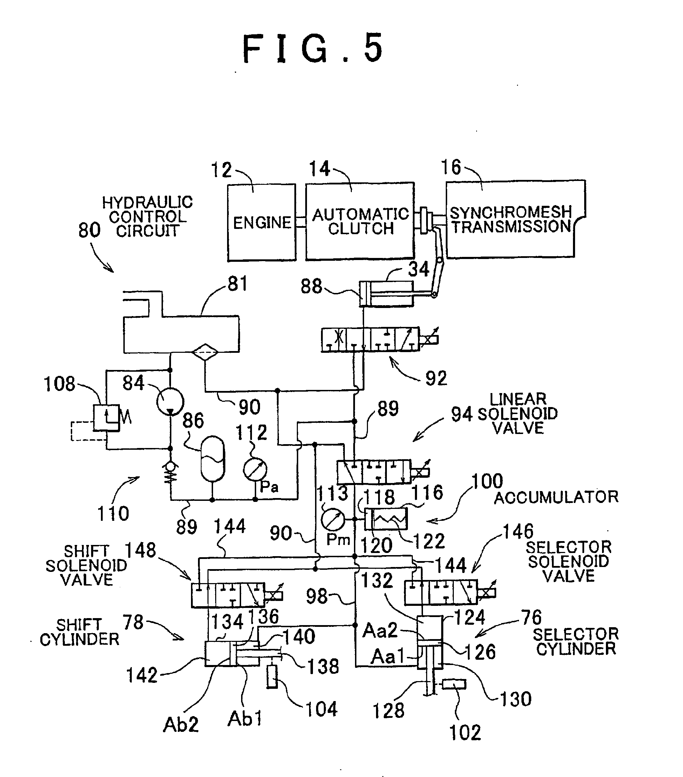

The transmission 16 further includes three clutch hub sleeves (engaging sleeves) 50a, 50b, 50c included in the synchromesh clutches 48a - 48e, and three parallel fork shafts 52 (only one of which is shown in FIG. 1) provided with three forks 51 (only one of which is shown in FIG. 1) that are engaged with the clutch hub sleeves 50a, 50b, 50c to be rotatable relative to the sleeves about the axis of the input shaft 42 or output shaft 44, so as to selectively move the clutch hub sleeves 50a, 50b, 50c in the axial direction of the input shaft 42 or output shaft 44, thereby to establish a selected one of gear positions of the transmission 16. The transmission 16 further includes a shift & selector shaft 59 installed in a direction substantially perpendicular to the above-mentioned fork shafts 52. The shift & selector shaft 59 is adapted to be mechanically moved in a selecting direction as an axial direction substantially perpendicular to the fork shafts 52, in accordance with the operation of a selector cylinder 76 (which will be described later, referring to FIG. 5) that functions as a selector actuator, to be engaged with a selected one of the three fork shafts 52. The shift & selector shaft 59 is also adapted to be rotated about the axis substantially perpendicular to the fork shaft 52 in this embodiment, for example, in accordance with the operation of a shift cylinder (hydraulic cylinder) 78 (which will be described later, referring to FIG. 5) that functions as a shift actuator, so as to move the fork shaft 52 in the axial direction thereof, thereby to establish a certain gear position of the transmission.

In addition, a pair of reverse gears 54 are mounted on the input shaft 42 and the output shaft 44 such that these gears are not in mesh with each other. The transmission 16 is placed in a reverse gear position when a reverse-drive idle gear mounted on a countershaft (not shown) comes into mesh with the pair of reverse gears 54, respectively. The input shaft 42 is coupled to the clutch output shaft 24 of the automatic clutch 14 via a spline coupling or joint 55, and an output gear 56, which is mounted on the output shaft 44, meshes with a ring gear 58 of the differential gear unit 18. The differential gear unit 18, which is of a bevel gear type, has a pair of side gears 80R, 80L to which drive shafts 82R, 82L are respectively coupled by spline fitting, or the like, so that right and left front wheels (driving wheels of the vehicle) 84R, 84L are rotated or driven by the drive shafts 82R, 82L, respectively. FIG. 1 is an exploded view showing the axes of the input shaft 42, output shaft 44 and the ring gear 58 in the same plane.

As described above, the shift & selector shaft 59 is actuated by the selector cylinder 76 to be engaged with a selected one of the three fork shafts 52, so as to be placed in one of three select positions in the selecting direction. In this embodiment, for example, the shift & selector shaft 59 is placed in one of a first select position in which the shaft 59 can engage with the clutch hub sleeve 50c via the corresponding fork shaft 52 and fork 51, a second select position in which the shaft 59 can engage with the clutch hub sleeve 50b, and a third select position in which the shaft 59 can engage with the clutch hub sleeve 50a.

Also, the shift & selector shaft 59 is actuated by the shift cylinder 78 to be rotated about the axis substantially perpendicular to the fork shafts 52, as described above, so as to be placed in one of three shift positions. In this embodiment, for example, the shift & selector shaft 59 is placed in one of a first shift position in which the clutch hub sleeve 50a, 50b, 50c is moved rightward in FIG. 1 via the corresponding fork shaft 52 and fork 51, to be engaged with one of the synchromesh clutches 48a, 48c, 48e, a second shift position in which the clutch hub sleeve 50b, 50c is moved leftward in FIG. 1 to be engaged with the synchromesh clutch 48b or 48d, and a neutral position in which none of the synchromesh clutches 48a - 48e is engaged, to provide a neutral condition.

When the shift & selector shaft 59 is placed in the first shift position of the first select position, the synchromesh clutch 48e is engaged so as to establish a first gear position G1 having the largest speed ratio (= the rotational speed NIN of the input shaft 42 / the rotational speed NOUT of the output shaft 44). In the second shift position of the first select position, the synchromesh clutch 48d is engaged so as to establish a second gear position G2 having the second largest speed ratio. In the first shift position of the second select position, the synchromesh clutch 48c is engaged so as to establish a third gear position G3 having the third largest speed ratio. In the second shift position of the second shift position, the synchromesh clutch 48b is engaged so as to establish a fourth gear position G4 having the fourth largest speed ratio. The speed ratio of the fourth gear position G4 is substantially equal to 1. In the first shift position of the third select position, the synchromesh clutch 48a is engaged so as to establish a fifth gear position G5 having the smallest speed ratio. In the second shift position of the third select position, the reverse gear position is established. The selector cylinder 76 and shift cylinder 78 for moving the fork shafts 52 function as shift actuators for switching or changing the gear positions of the transmission 16 without requiring the driver's operating force or manipulations.

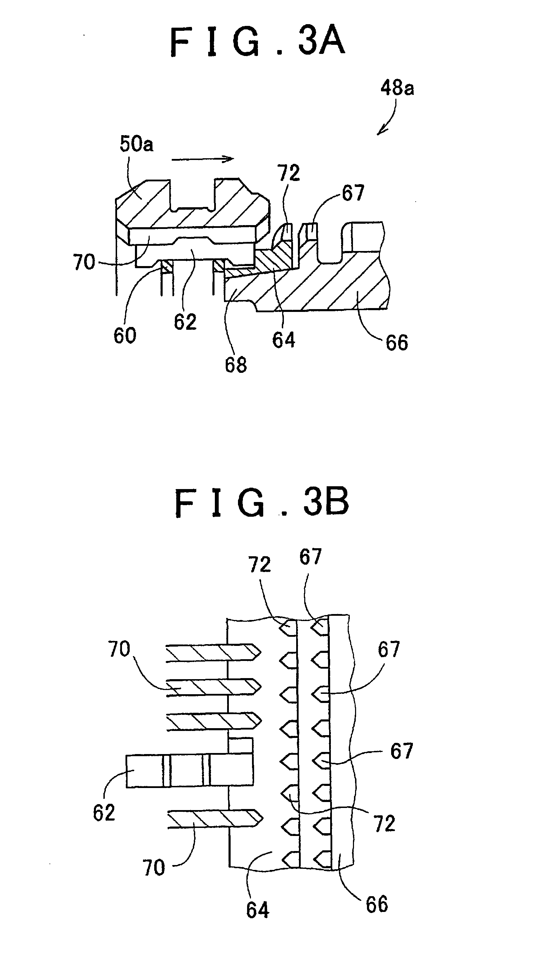

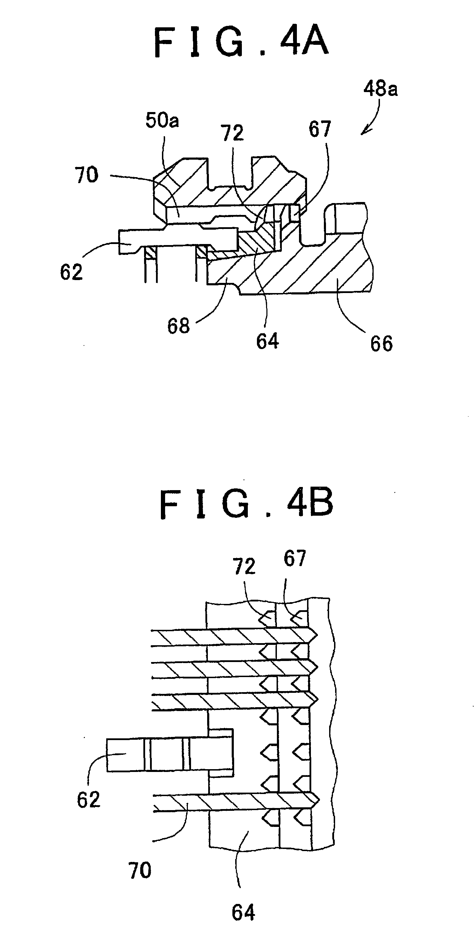

Referring next to FIGS. 3A and 3B and FIGS. 4A and 4B, the construction and operation of the synchromesh clutch 48a will be specifically described. The synchromesh clutch 48a includes the above-mentioned clutch hub sleeve 50a, a shifting key 62 that is engaged with the clutch hub sleeve 50a by a key spring 60, and a synchronizer ring 64 that is rotated along with the shifting key 62 about the axis of the input shaft 42 with a certain play provided between the synchronizer ring 64 and the shifting key 62. The synchromesh clutch 48a further includes engaging teeth 67 comprising outer teeth formed integrally on the input gear 66, or first gear, of the shift gear pair 46a, a coned portion 68 integral with the input gear 66, and a hub 69a (see FIG. 1) fixed to the input shaft 42. With spline teeth (inner teeth) 70 provided on the inner circumferential surface of the clutch hub sleeve 50a meshing or engaging with spline teeth (outer teeth) provided on the outer circumferential surface of the hub 69a, the clutch hub sleeve 50a is arranged to constantly rotate as a unit with the input shaft 42 while being movable in the axial direction of the input shaft 42.

When the clutch hub sleeve 50a is moved rightward in FIG. 3A by the shift cylinder 78 via the corresponding fork shaft 52 and fork 51, as described above, and when there is a difference in the rotational speed between the clutch hub sleeve 50a and the input gear 66, the synchronizer ring 64 is pressed against the coned portion 68 via the shifting key 62 so that tapered faces of the ring 64 and the coned portion 68 engage with each other, and power is transmitted to the input gear 66 due to friction between the ring 64 and the coned portion 68. Then, the spline teeth 70 of the clutch hub sleeve 50a are brought into abutment with spline teeth 72 formed on the synchronizer ring 64, so that the clutch hub sleeve 50a is inhibited from moving further in the axial direction.

However, once the difference in the rotational speed between the clutch hub sleeve 50a and the input gear 66 is eliminated, namely, once the clutch hub sleeve 50a and the input gear 66 are rotated in synchronization with each other (i.e., at the same speed), the clutch hub sleeve 50a is allowed to move in the axial direction; therefore, the clutch hub sleeve 50 is moved further rightward in FIG. 3A. The synchronizer ring 64 functions as a synchronizing ring for inhibiting movement of the clutch hub sleeve 50a by contacting with the inner teeth of the clutch hub sleeve 50a until the rotational speed of the input gear 66 becomes equal to that of the clutch hub sleeve 50, during the course of moving the clutch hub sleeve 50a (engaging sleeve) toward the engaging teeth 67 of the input gear 66. Then, as shown in FIGS. 4A, 4B, the spline teeth 70 of the clutch hub sleeve 50a come into mesh with spline teeth 72 provided on the synchronizer ring 64, and further into mesh with the engaging teeth 67 of the input gear 66. As a result, the input shaft 42 and the input gear 66 are operatively coupled to each other, and power is transmitted from the input shaft 42 to the output shaft 44 via the shift gear pair 46a. FIGS. 3A, 3B show an unengaged condition, or neutral condition, of the synchromesh clutch 48a, and FIGS. 4A, 4B show an engaged condition of the synchromesh clutch 48a. FIG. 3A and FIG. 4A are cross-sectional views taken in one plane including the axis of the clutch 48a, and FIG. 3B and FIG. 4B are exploded views showing the conditions of FIG. 3A and FIG. 4A, respectively, except for a cylindrical portion of the clutch hub sleeve 50a, as viewed from the outer periphery of the clutch 48a.

The other synchromesh clutches 48b - 48e have substantially the same construction as that of the synchromesh clutch 48a. It is, however, to be noted that the synchromesh clutches 48b and 48c share the clutch hub sleeve 50b, and the synchromesh clutches 48d and 48e share the clutch hub sleeve 50c.

FIG. 5 is a circuit diagram showing a hydraulic control circuit (HPU: Hydraulic Power Unit) 80 for controlling hydraulic pressures supplied to the clutch release cylinder 34, selector cylinder 76 and the shift cylinder 78. The hydraulic control circuit 80 includes an electric motor-driven oil-hydraulic pump 84 that feeds hydraulic fluid under pressure from a reservoir 81, an accumulator 84 that accumulates the hydraulic pressure, or line pressure Pa, supplied from the oil-hydraulic pump 84, and a three-port linear spool type clutch solenoid valve 92 adapted to be placed in a selected one of three positions, namely, a first position where the valve 92 connects an oil chamber 88 of the clutch release cylinder 34 to a main oil channel 89, a second position where the valve 92 disconnects the oil chamber 88 from the main oil channel 89, and a third position where the valve 92 connects the oil chamber 88 to a drain channel 90.

When the clutch solenoid valve 92 is placed in the first position for connecting the oil chamber 88 of the clutch release cylinder 34 to the main oil channel 89, the hydraulic fluid is supplied from the clutch solenoid valve 92 to the oil chamber 88, so that the automatic clutch 14 is disengaged. When the clutch solenoid valve 92 is placed in the third position for connecting the oil chamber 88 to the drain channel 90, and the hydraulic fluid is allowed to flow out of the clutch release cylinder 34, a piston of the clutch release cylinder 34 is pushed back under the bias force of the diaphragm spring 34 of the automatic clutch 14, and the automatic clutch 14 is engaged. The amount (or flow rate) of the hydraulic fluid flowing through the clutch solenoid valve 92 (or the cross-sectional area of the valve 92 through which the fluid flows) can be continuously controlled. By changing the amount or flow rate of the hydraulic fluid flowing out of the clutch release cylinder 34 when the automatic clutch 14 is engaged, the connecting (or engaging) speed (or the time required for engagement) can be set to an appropriate speed, according to shift conditions, such as the type of shifting (e.g., upshifting or downshifting), vehicle speed, and the engine speed.

The hydraulic control circuit 80 also includes a three-port linear spool type linear solenoid valve (main control valve 94) for regulating the master pressure Pm to be applied to the selector cylinder 76 and shift cylinder 78, to a value commensurate with, for example, the input torque of the transmission 16 or the throttle opening. The linear solenoid valve 94 is placed in a selected one of three operating states, namely, a connecting state in which the valve 94 connects the main oil channel 89 to the first oil channel 98, a shutoff state in which the valve 94 disconnects the first oil channel 98 from the main oil channel 89, and a drain state in which the valve 94 connects the first oil channel 98 to the drain channel 90 while disconnecting the first oil channel 98 from the main oil channel 89. The hydraulic control circuit 80 further includes an accumulator 100 provided in the first oil channel 98 between the linear solenoid valve 94 and the shift cylinder 78 and selector cylinder 76, for accumulating the hydraulic pressure supplied from the linear solenoid valve 84 while storing a certain amount of the hydraulic fluid, and supplying the stored hydraulic fluid to the shift cylinder 78 after the linear solenoid valve 94 disconnects the first oil channel 98 from the main oil channel 89. The hydraulic control circuit 80 further includes stroke sensor 102 and stroke sensor 104 for detecting the operating amounts or operating positions of the selector cylinder 76 and the shift cylinder 78, respectively. The hydraulic control circuit 80 further includes a relief valve 108, check valve 110, hydraulic pressure sensor 112 for detecting the line pressure Pa of the hydraulic fluid, hydraulic pressure sensor 113 for detecting the original pressure Pm applied to the selector cylinder 76 and shift cylinder 78, and a strainer 114.

Upon shifting of the transmission 16, the linear solenoid valve 94 serving as a control valve supplies the hydraulic fluid to the shift cylinder 78 until one of the synchromesh clutches 48a - 48e, which has been engaged to establish the current gear position, is disengaged and brought into a neutral condition. Then, the linear solenoid valve 94 shuts off or stops supply of the hydraulic fluid to the selector cylinder 76 and the shift cylinder 78 when one of the synchromesh clutches 48a - 48e to be engaged for shifting is in a neutral condition in which the shift cylinder 78 is placed at a predetermined operating position before the clutch hub sleeve 50a starts pressing the synchronizer ring 64, prior to a start of engaging of the clutch hub sleeve 50 with the engaging teeth 67, namely, prior to a start of the push-in stroke of the clutch hub sleeve 50. In this embodiment, the predetermined operating position of the shift cylinder 78 is set to the neutral position of the shift spring 78. Also, in this embodiment, the neutral position is set at an intermediate position between a position at which the synchronizer ring 64 starts being pressed at one side on the shift stroke of the shift cylinder 78 corresponding to the above-indicated first shift position, and a position at which the synchronizer ring 64 starts being pressed at the other side corresponding to the above-indicated second shift position.

The accumulator 100, which is a spring loaded accumulator, has a main body 116 in the form of a cylindrical container, an accumulator piston 120 that is slidably fitted in the main body 116 and forms a variable-volume oil chamber 118, and a spring 122 provided on one side of the accumulator piston 120 opposite to the oil chamber 118, for exerting spring force on one face of the accumulator piston 120 to bias the same toward the oil chamber 118.

The selector cylinder 76, which is a double-acting hydraulic cylinder, has a cylindrical main body or cylinder body 124, a piston 126 slidably fitted in the cylinder body 124, a rod 128 that is joined at one end to the piston 126 and protrudes from the cylinder body 124 to the outside, and first oil chamber 130 and second oil chamber 132 formed in the cylinder body 124 on the opposite sides of the piston 126 such that a part of the rod 128 is located in the first oil chamber 130. The piston 126 is biased by a spring (not shown) toward a neutral position corresponding to the second select position of the shift & selector shaft 59. A first pressure-receiving area Aa1 of one end face of the piston 126 which faces the first oil chamber 130 is equal to one half of a second pressure-receiving area Aa2 of the other end face of the piston 126 which faces the second oil chamber 132.

The shift cylinder 78, which is a double-acting hydraulic cylinder, has a cylindrical main body or cylinder body 134, a piston 136 slidably fitted in the cylinder body 134, a rod 138 that is joined at one end to the piston 136 and protrudes from the cylinder body 134 to the outside, and first oil chamber 140 and second oil chamber 142 formed in the cylinder body 134 on the opposite sides of the piston 136 such that a part of the rod 138 is located in the first oil chamber 140. The piston 136 is biased by a spring (not shown) toward a neutral position corresponding to the neutral position of the shift & selector shaft 59. A first pressure-receiving area Ab1 of one end face of the piston 136 of the shift cylinder 76 which faces the first oil chamber 140 is equal to one half of a second pressure-receiving area Ab2 of the other end face of the piston 136 which faces the second oil chamber 142.

The selector stroke sensor 102 is connected to the rod 128 of the selector cylinder 76, and functions as a selector stroke detector for detecting the position or distance to/over which the shift & selector shaft 59 is moved in the selecting direction, i.e., in the direction substantially perpendicular to the axial direction of the fork shaft 52, with reference to the neutral position of the selector cylinder 76, for example.

The shift stroke sensor 104 is connected via a link mechanism (not shown) to the rod 138 of the shift cylinder 78, and functions as a shift stroke detector for detecting the position or amount to/by which the shift & selector shaft 59 is rotated about the axis of the above-indicated selecting direction, with reference to, for example, the neutral position of the shift cylinder 78. In this manner, the shift stroke sensor 104 detects the position or distance to/over which the fork shaft 52 is moved in a direction parallel to the axis of the input shaft 42, with reference to the above-mentioned neutral condition.

Each of the selector stroke sensor 102 and shift stroke sensor 104 consists of, for example, a potentiometer, a magnetic scale, or the like. The potentiometer includes a fixed resistor, and a brush that is moved with the rod 128, 138 while being in sliding contact with the fixed resistor, and is adapted to produce a voltage output proportional to the moving distance or amount of rotation of the shift & selector shaft 59. The magnetic scale includes a fixed member having a specified number of magnetized regions per unit distance in one direction, and a magnetic head that is moved in this direction relative to the fixed member while being located close to the fixed member, and is adapted to generate a pulse signal of which the number of pulses corresponds to the above-mentioned moving distance or amount of rotation of the shift & selector shaft 59.

In the hydraulic control circuit 80, the first oil channel 98 is connected to the first oil chambers 130, 140 of the selector cylinder 76 and the shift cylinder 78, and a second oil channel 144, which diverges from the first oil channel 98, is connected to the second oil chambers 132, 142 of the selector cylinder 76 and the shift cylinder 78. The hydraulic control circuit 80 further includes a selector solenoid valve (switching control valve) 146 and a shift solenoid valve (switching control valve) 148, which are provided in the second oil channel 144. The selector solenoid valve 146 is placed in a selected one of three operating states, i.e., a first connecting state in which the second oil chamber 132 of the selector cylinder 76 is connected to the first oil channel 98 via the second oil channel 144, a shutoff state in which the second oil chamber 132 is disconnected from the first oil channel 98, and a second connecting state in which the second oil chamber 132 is connected to the drain channel 90. The shift solenoid valve 148 is placed in a selected one of three operating states, i.e., a first connecting state in which the second oil chamber 142 of the shift cylinder 78 is connected to the first oil channel 98 via the second oil channel 144, a shutoff state in which the second oil chamber 142 is disconnected from the first oil channel 98, and a second connecting state in which the second oil chamber 142 is connected to the drain channel 90.

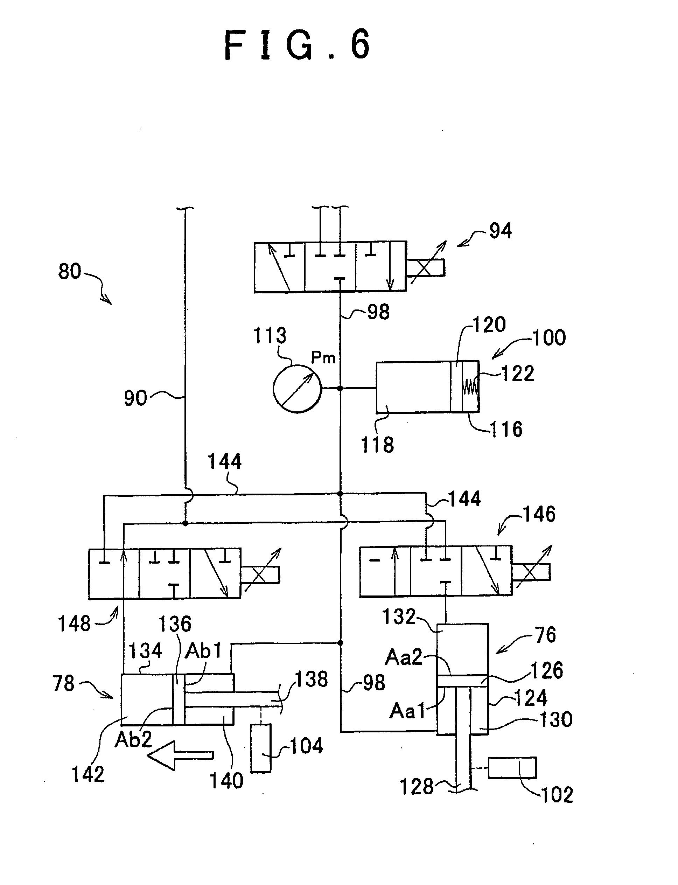

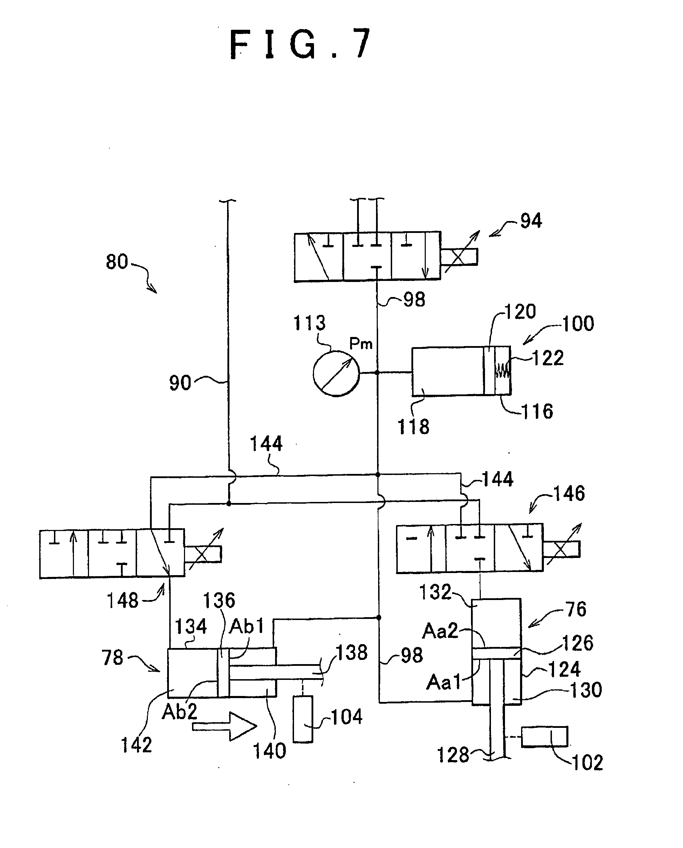

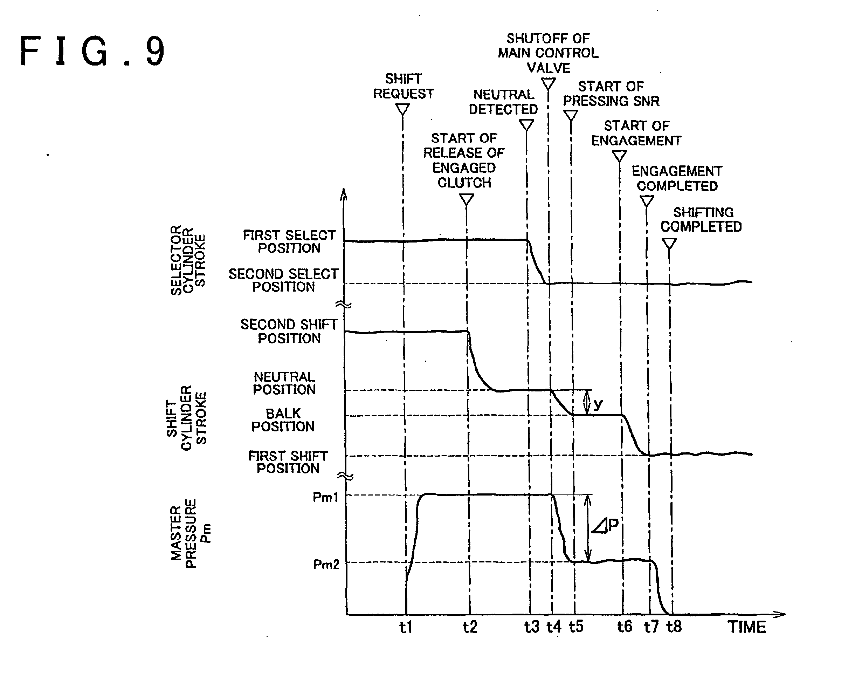

FIG. 6, which shows a part of the hydraulic control circuit 80 of FIG. 5, illustrates a condition in which the clutch hub sleeve 50b of the synchromesh clutch 48 that is in a neutral condition is moved to a position corresponding to the second shift position, namely, the rod 138 (piston 136) of the shift cylinder 78 is moved toward the second oil chamber 142 (in the direction of the left-pointing arrow in FIG. 6). In the condition of FIG. 6, the linear solenoid valve 94 and the selector solenoid valve 146 are in the shutoff states, and the shift solenoid valve 148 is in the second connecting state. FIG. 7, which shows a part of the hydraulic control circuit 80 of FIG. 5, illustrates a condition in which the clutch hub sleeve 50b of the synchromesh clutch 48 that is in a neutral condition is moved to a position corresponding to the first shift position, namely, the rod 138 (piston 136) of the shift cylinder 78 is moved toward the first oil chamber 140 (in the direction of the right-pointing arrow in FIG. 7). In the condition of FIG. 7, the linear solenoid valve 94 and the selector solenoid valve 146 are in the shutoff states, and the shift solenoid valve 148 is in the first connecting state. FIG. 7 illustrates a condition of the hydraulic control circuit 80 at time t4 in the time chart of FIG. 9 which will be described later.

The hydraulic fluid is supplied to the first oil chamber 140 when the shift cylinder 78 is operated from the neutral position to the second shift position, as shown in FIG. 6, and the hydraulic fluid is supplied to the first oil chamber 140 and the second oil chamber 142 when the shift cylinder 78 is operated from the neutral position to the first shift position, as shown in FIG. 7. As described above, the first pressure-receiving area Ab1 of one end face of the piston 136 of the shift cylinder 78 which faces the first oil chamber 140 is equal to one half of the second pressure-receiving area Ab2 of the other end face that faces the second oil chamber 142. Namely, when the hydraulic fluid is supplied from the hydraulic pressure source, or the accumulator 100, to operate or move the shift cylinder 78 from the neutral condition, the same hydraulic pressure can be obtained after the operation of the shift cylinder 78 if the operating amount, or operating stroke, of the shift cylinder 78 is the same, irrespective of which (forward or backward) direction in which the shift cylinder 78 is operated, due to the balance between the spring force of the spring (not shown) and the force applied from the hydraulic fluid to the piston 136.

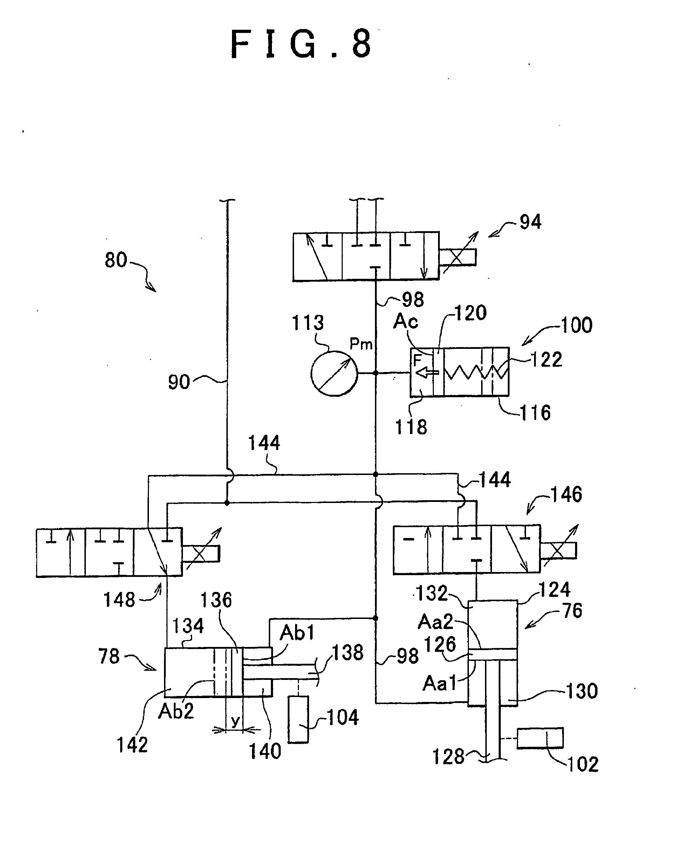

FIG. 8, which shows a part of the hydraulic control circuit 80 of FIG. 5, illustrates a condition of the hydraulic control circuit 80 at the time of shifting of the transmission 16. After the synchromesh clutch 48 that has been engaged to establish the gear position prior to the shifting is released and brought into a neutral condition, the synchronizer ring 64 of the synchromesh clutch 48b, for example, which is to be engaged to establish the gear position after the shifting, starts a synchronizing operation for engagement of the clutch 48b, as shown in FIG. 8. FIG. 8 illustrates a condition of the hydraulic control circuit 80 at time t5 in the time chart of FIG. 9 which will be described later. In FIG. 8, two-dot chain lines indicated in the accumulator 100 represent the position of the accumulator piston 120 in the condition of FIG. 7, and Ac[mm$^2$] is the cross-sectional area of the oil chamber 118 of the accumulator 100, namely, the cross-sectional area of the piston 120. In FIG. 8, two-dot chain lines indicated in the shift cylinder 78 represent the position of the piston 136 in FIG. 7, namely, the neutral position of the piston 136, and y[mm] is the operating amount, or displacement, of the piston 136 that is operated from the time when the linear solenoid valve 94 is brought into in a shutoff state while the shift cylinder 78 is in the neutral condition, to the time when the synchronizing operation is started.

The accumulator 100 is able to control the master pressure Pm [Pa] of the first oil channel 98 at the downstream of the linear solenoid valve 94, by controlling the amount Q [mm$^3$] of the hydraulic fluid that passes through the linear solenoid valve 94. The spring loaded accumulator 100 used in this embodiment has characteristics as represented by Equations (1) through (5) as follows.

$$Pm[Pa] = Q[mm^3] / C[mm^3/Pa] \qquad (1)$$

$$V[mm^3] = \int Q \, dq \qquad (2)$$

$$x[mm] = V[mm^3] / Ac[mm^2] \qquad (3)$$

$$F[N] = k[N/mm] \times x[mm] \qquad (4)$$

$$Pm[Pa] = F[N] / Ac[mm^2] \qquad (5)$$

V[mm$^3$] in Equation (2) is the integral of the flow amount Q [mm$^3$], namely, the total amount of the hydraulic fluid that has passed through the linear solenoid valve 94. In Equation (4), k [N/mm] is the spring constant of the spring 122 of the spring loaded accumulator 100, and x [mm] is the displacement of the spring 122 relative to its free length. F [N] in Equation (4), which is indicated by an arrow in FIG. 8, is the reaction force of the spring 122 applied to the accumulator piston 120, against the hydraulic pressure supplied into the oil chamber 118.

Here, the compliance C [mm$^3$/Pa] in Equation (1) above is a value that is determined as appropriate according to the shift time or period and the performance of the linear solenoid valve 94, within the range between the minimum compliance Cmin [mm$^3$/Pa] represented by Equation (6) below, and the maximum compliance Cmax [mm$^3$/Pa] represented by Equation (7) below. The compliance C, which represents the performance of the accumulator 100, is a value (volume/pressure) obtained by dividing the volume of the hydraulic fluid flowing into or flowing out of the accumulator 100 by a difference between the pressures measured before and after the hydraulic fluid flows into or out of the accumulator 100. The maximum compliance Cmax is a value that satisfies a condition that engagement of the clutch hub sleeve 50a with the engaging teeth 67 after start of the synchronizing operation, or the push-in stroke, is completed even when no hydraulic fluid is supplied from the linear solenoid valve 94, i.e., no feed-forward control is performed, and a condition that the master pressure Pm is not reduced to around zero when the engagement is completed. If the linear solenoid valve 94 assures high performance, namely, has a high capability of quickly regulating the hydraulic pressure to a certain target pressure with feed-forward control appropriately performed, the above-mentioned maximum compliance Cmax is set to a small value.

$$Cmin[mm^3/Pa] = \Delta V[mm^3] / \Delta P[Pa] \qquad (6)$$

$$Cmax[mm^3/Pa] = Qsh[mm^3] \times Td[1/Pa] \qquad (7)$$

In Equation (6), $\Delta P$ is a pressure difference between a first hydraulic pressure Pm1 [Pa] supplied to the shift cylinder 78 that operates the clutch hub sleeve 50 when disengaging the synchromesh clutch 48 that has been engaged to establish the gear position prior to shifting of the transmission, and a second hydraulic pressure Pm2 [Pa] supplied to the shift cylinder 78 when the synchronizer ring 64 of the synchromesh clutch 48 that is to be engaged to establish the gear position after the shifting starts a synchronizing operation so as to engage the synchromesh clutch 48. In Equation (6), $\Delta V$, which is represented by Equation (8) below, is the amount of the hydraulic fluid consumed by the shift cylinder 78 during shifting from the time when the synchromesh clutch 48 is placed in the neutral condition to the start of the synchronizing operation. In Equation (8) below, A [mm$^2$] is the cross-sectional area defined by the inner circumference of the main body 134 of the shift cylinder 78, which is substantially equal to the second pressure-receiving area Ab2.

$$\Delta V[mm^3] = A[mm^2] \times y[mm] \qquad (8)$$

In Equation (7), Qsh [mm$^3$] is the maximum amount of the hydraulic fluid that passes through the shift solenoid valve 148 to be supplied to the shift cylinder 78 during the shifting, from the time when the synchromesh clutch 48 is in the neutral condition to the time when the synchromesh clutch 48 to be engaged to establish the gear position after the shifting is engaged. In Equation (7) above, Td[1/Pa] is a response delay value that is set in relation to the performance of the linear solenoid valve 94, and is set to a smaller value as the performance of the valve 94 is higher.

The accumulator 100 is designed so as to satisfy the above-indicated Equations (1) through (8). For example, the pressure to be applied to the synchronizer ring 64, or the above-indicated second hydraulic pressure Pm2, is initially determined from the desired load (allowable load) to be applied to the synchronizer ring 64 during the synchronizing operation, and dimensions of respective parts, and so forth, are determined.

The operation of the hydraulic control circuit 80 constructed as described above during the shift period will be described, with reference to the time chart of FIG. 9 that illustrates upshifting from the second gear position G2 to the third gear position G3 by way of example. In FIG. 9, the master pressure Pm applied from the linear solenoid valve 94 to the selector cylinder 76 and the shift cylinder 78, the stroke position of the shift cylinder 78 and the stroke position of the selector cylinder 76 are plotted on the same time axis.

At time t1 in FIG. 9, an operation to release the automatic clutch 14 is started in response to a request for shifting made through the operator's manipulation of the shift lever, for example. The linear solenoid valve 94 that was in the drain state before time t1 is brought into the connecting state, and the master pressure Pm applied from the linear solenoid valve 94 to the selector cylinder 76 and the shift cylinder 78 starts being regulated to Pm1. In the meantime, the selector solenoid valve 146 and the shift solenoid valve 148 are held in the shutoff states. In a period between time t1 and time t2, the operation to release the automatic clutch 14 is completed.

Subsequently, at time t2, disengagement of the synchromesh clutch 48d that has been engaged to establish the second gear position G2 is started. More specifically, the shift solenoid valve 148 is brought into the first connecting state, and the shift cylinder 78 that is in the second shift position is operated to the neutral position by time t3.

At time t3, the shift cylinder 78 is in the neutral position detected based on the operating amount of the shift cylinder 78 measured by the stroke sensor 104, namely, the synchromesh clutch 48 is in a neutral condition. The selector solenoid valve 146 is brought into the second connecting state at time t3, and the selector cylinder 76 is placed in the second select position by time t4.

Subsequently, at time t4, the selector solenoid valve 146 and the linear solenoid valve 94 are brought into the shutoff states, as shown in FIG. 7, and the master pressure Pm is automatically reduced from Pm1 to Pm2 as the shift cylinder 76 is moved from the neutral position to a so-called balk position at which the synchronizer ring 64 starts a synchronizing operation.

Then, at time t5, the shift cylinder 76 is placed in the balk position as shown in FIG. 8, and the synchronizing operation of the synchronizer ring 64 is started.

Subsequently, the synchronizing operation is completed at time t6, and the spline teeth 70 of the clutch hub sleeve 50b are brought into mesh with the spline teeth 72 of the synchronizer ring 64 and the engaging teeth 67 of the input gear 66 by time 7, so that engagement of the synchromesh clutch is completed.

Then, the shift solenoid valve 148 is brought into the shuoff state and shifting of the transmission 16 is completed at time t8.

As described above, the hydraulic control circuit 80 of the vehicular synchromesh transmission 16 of this embodiment includes the linear solenoid valve 94 and the accumulator 100. The linear solenoid valve 94 supplies a hydraulic pressure to the shift cylinder 78 until one of the synchromesh clutches 48a - 48c, which has been engaged, is disengaged and brought into a neutral condition, and shuts off or stops supply of the hydraulic pressure to the selector cylinder 76 and the shift cylinder 78 when one of the synchromesh clutches 48a-48e is in a neutral condition before the clutch hub sleeve 50a starts pressing the synchronizer ring 64, prior to a start of engagement of the clutch hub sleeve 50a with the engaging teeth 67, i.e., a start of the push-in stroke. The accumulator 100, which is provided in the first oil channel 98 between the linear solenoid valve 94 and the shift cylinder 78, stores a certain amount of hydraulic fluid while accumulating the hydraulic pressure supplied from the linear solenoid valve 94, and supplies the stored hydraulic fluid to the shift cylinder 78 after the linear solenoid valve 94 is shut off. With this arrangement, the hydraulic pressure is supplied from the accumulator 100 to the shift cylinder 78 after the supply of the hydraulic pressure from the linear solenoid valve 94 to the shift cylinder 78 is shut off. Also, the hydraulic pressure, or the master pressure Pm, supplied from the accumulator 100 is reduced from the first oil pressure Pm1 to the second oil pressure Pm2 according to the amount of the hydraulic fluid supplied from the accumulator 100. Therefore, when the synchromesh clutch 48a - 48e that has been in a neutral condition starts a synchronizing operation, a hydraulic pressure having an appropriate pressure level is generated to the shift cylinder 78 without delay. Namely, reduction of the master pressure, and reduction of the operating speed of the shift cylinder 78 which leads to alleviation of an impact on the synchronizer ring 64 are achieved at the same time.

In the hydraulic control circuit 80 of the vehicular synchromesh transmission 16 of this embodiment, the shift cylinder 78 is a double-acting hydraulic cylinder having the cylinder body 134, piston 136 slidably fitted in the cylinder body 134, rod 138 that is joined at one end to the piston 136 and protrudes from the cylinder body 134 to the outside, and the first oil chamber 140 and second oil chamber 142 formed on the opposite sides of the piston 136 within the cylinder body 134 such that a part of the rod 138 is located in the first oil chamber 140. The hydraulic control circuit 80 further includes the stroke sensor 104 for detecting the operating amount or operating position of the shift cylinder 78. In the hydraulic control circuit 80 of this embodiment, the linear solenoid valve 94 is arranged to shut off supply of the hydraulic pressure to the shift cylinder 78 when the shift cylinder 78 is placed at the predetermined operating position, based on the operating amount or operating position detected by the stroke sensor 104. Accordingly, the hydraulic pressure is supplied from the accumulator 100 to the shift cylinder 78, after the supply of the hydraulic pressure from the linear solenoid valve 94 to the shift cylinder as a hydraulic cylinder is shut off when the shift cylinder 78 is placed at the predetermined operating position, based on the operating amount detected by the stroke sensor 104. Also, the hydraulic pressure supplied from the accumulator 100 is reduced in accordance with the amount of the hydraulic fluid thus supplied. Therefore, when the synchromesh clutch 48a - 48e that has been in a neutral condition starts a synchronizing operation, a hydraulic pressure having an appropriate level is generated to the shift cylinder 78 without delay.

In the hydraulic control circuit 80 of the vehicular synchromesh transmission 16 of this embodiment, the first oil channel 98 is connected to the first oil chamber 140 of the shift cylinder 78, and the shift solenoid valve 148 is further provided in the second oil channel 144 that diverges from the first oil channel 98 and is connected to the second oil chamber 142 of the shift cylinder 78. The shift solenoid valve 148 is placed in a selected one of the three states, i.e., the first connecting state in which the second oil chamber 142 is connected to the first oil channel 98, the shutoff state in which the second oil chamber 142 is disconnected from the first oil channel 98, and the second connecting state in which the second oil chamber 142 is connected to the drain channel 90. In the hydraulic control circuit 80 of this embodiment, the first pressure-receiving area Ab1 of one face of the piston 136 which faces the first oil chamber 140 is equal to one half of the second pressure-receiving area Ab2 of the other face of the piston 136 which faces the second oil chamber 142. With these arrangements, when the hydraulic pressure is supplied from the hydraulic pressure source, or the accumulator 100, to the shift cylinder 78 after supply of the hydraulic pressure from the linear solenoid valve 94 to the shift cylinder 78 is shut off, the same hydraulic pressure is obtained if the operating stroke of the shift cylinder 78 is the same, irrespective of which direction in which the shift cylinder 78 is operated, i.e., irrespective of whether the piston 136 of the shift cylinder 78 is moved toward the first oil chamber 140 or the second oil chamber 142. Thus, the control of the linear solenoid valve 94 is advantageously simplified. Namely, even where the amount of the hydraulic fluid supplied from the accumulator 100 is constant after the supply of the hydraulic pressure from the linear solenoid valve 94 to the shift cylinder 78 is shut off, the shift cylinder 78 can be appropriately operated in either of the above-indicated two directions.

In the hydraulic control circuit 80 of the vehicular synchromesh transmission 16 of this embodiment, the accumulator 100 is a spring loaded accumulator having the container-like main body 116, accumulator piston 120 that is slidably fitted in the main body 116 and forms the variable-volume oil chamber 118, and the spring 122 that exerts spring force on one face of the accumulator piston 120 to bias the piston 120 toward the accumulator oil chamber 118. The hydraulic pressure accumulated in the spring loaded accumulator 100 and the amount of the hydraulic fluid stored in the accumulator 100 are determined by the characteristics of the spring 122, which advantageously makes it easy to design the accumulator 100.

In the hydraulic control circuit 80 of the vehicular synchromesh transmission 16 of this embodiment, each of the shift gear pairs 46a - 46e consists of the input gear 66, or the first gear, which is mounted on one of the two parallel shafts, i.e., the input shaft 42 and the output shaft 44, such that the first gear is rotatable relative to the one shaft, and the second gear mounted on the other of the two parallel shafts such that the second gear cannot rotate relative to the other shaft. Each of the synchromesh clutches 48a - 48e includes (a) the engaging teeth 67 comprising the outer teeth formed integrally on the input gear 66, (b) the hub 69a, 69b, 69c fixed to one of the two parallel shafts, (c) the cylindrical clutch hub sleeve 50a, 50b, 50c having inner teeth that mesh with the outer teeth of the hub 69a, 69b, 69c and is actuated by the shift cylinder 78 in the axial direction of one of the two parallel shafts, and (d) the synchronizer ring 64 that contacts with the inner teeth of the clutch hub sleeve 50 so as to inhibit further movement of the clutch hub sleeve 50 until the rotational speed of the engaging teeth 67 becomes equal to that of the clutch hub sleeve 50a, 50b, 50c, during movement of the clutch hub sleeve 50a, 50b, 50c toward the engaging teeth 67. The compliance C obtained by dividing the volume of the hydraulic fluid flowing into or out of the accumulator 100 by the difference between the pressures measured before and after the hydraulic fluid flow into or out of the accumulator 100 is set to a value obtained, upon shifting, by dividing the amount $\Delta V$ of the hydraulic fluid consumed from the time when the shift cylinder 78 is placed at the predetermined operating position to the time when the synchronizing operation is started, by the pressure difference $\Delta P$ between the first oil pressure Pm1 supplied to the shift cylinder 78 when it actuates the clutch hub sleeve 50 so as to release the synchromesh clutch 48 that has been engaged to establish the gear position before the shifting, and the second oil pressure Pm2 supplied to the shift cylinder 78 when the synchronizer ring 64 of the synchromesh clutch 48 that is to be engaged to establish the gear position after the shifting starts a synchronizing operation so as to engage the synchromesh clutch 48. Accordingly, after the linear solenoid valve 94 is placed in the shutoff state, namely, after supply of the hydraulic pressure from the linear solenoid valve 94 is interrupted or stopped, the hydraulic pressure is supplied from the accumulator 100 to the shift cylinder 78, and the hydraulic pressure thus supplied is naturally reduced in accordance with the amount of the hydraulic fluid thus supplied, down to the second oil pressure Pm as a preset target value. Therefore, when the clutch hub sleeve 50 of the synchromesh clutch 48 that has been in a neutral position is pressed against the synchronizer ring 64, namely, when synchronization by the synchromesh clutch 48 is started, the hydraulic pressure having a further appropriate level can be generated to the shift cylinder 78 without delay.

In the hydraulic control circuit 80 of the vehicular synchromesh transmission 16 of this embodiment, the above-mentioned predetermined operating position of the shift cylinder 78 is the position at which the synchromesh clutch 48a - 48e is disengaged or released on the shift stroke thereof and is thus placed in a neutral condition. Thus, after the supply of the hydraulic pressure from the linear solenoid valve 94 to the shift cylinder 78 is shut off, namely, after the neutral condition is detected, the hydraulic pressure is supplied from the accumulator 100 to the shift cylinder 78, and the hydraulic pressure, or the master pressure Pm, supplied from the accumulator 100 is reduced from the first oil pressure Pm1 to the second oil pressure Pm2, in accordance with the amount of the hydraulic fluid thus supplied. With this arrangement, when the synchromesh clutch 48a - 48e that has been in the neutral position starts a synchronizing operation for engagement of the clutch, the hydraulic pressure having a further appropriate level can be generated to the shift cylinder 78 without delay.

While one embodiment of the invention has been described in detail with reference to the drawings, the present invention is not limited to this embodiment, but may be embodied in other forms.

While the driving system of the vehicle is of the FF (front-engine, front-drive) type in the illustrated embodiment, the invention is not limitedly applied to this type of driving system, but may be favorably applied to vehicles of various driving systems.

While the transmission 16 is a constant mesh type transmission having some gear positions and including two parallel shafts in the illustrated embodiment, the transmission may include three or more shafts. Also, the transmission may be in various other forms; for example, not every gear position needs to be established through engagement of a constant mesh clutch.

While the operation of the hydraulic control circuit in the case of upshifting from the second gear position G2 to the third gear position G3 has been explained in the illustrated embodiment, the invention may be applied to the case of downshifting as well as upshifting, and may also be applied to the case of shifting to a gear position that is higher or lower by two steps than the previous gear position, for example, shifting from the second gear position G2 to the fourth gear position G4, as well as shifting by one step.

While each of the synchromesh clutches 48a - 48e is of a synchromesh type having the synchronizer ring 64 in the illustrated embodiment, the invention may be applied to other types of clutches.

While the accumulator 100 is a spring loaded accumulator in the illustrated embodiment, an accumulator of another type may be used.

It is to be understood that the above-described embodiment or modified example thereof is merely an exemplary embodiment of the invention, and that the invention may be embodied with various other changes, modifications and/or improvements, which may occur to those skilled in the art, without departing from the principle of the invention, though such embodiments will not be illustrated herein.

A hydraulic control circuit of a vehicular synchromesh transmission includes a linear solenoid valve (94) that supplies a hydraulic pressure to a shift cylinder (78) until one of a plurality of synchromesh clutches (48) is placed in a neutral condition, and shuts off the supply before a synchronizing operation is started, and an accumulator (100) provided in a first oil channel (98) between the linear solenoid valve (94) and the shift cylinder (78). The accumulator (100) stores a certain amount of hydraulic fluid while accumulating a hydraulic pressure, and functions as a hydraulic pressure source after the linear solenoid valve (94) is shut off. The hydraulic pressure' supplied from the accumulator (100) after the shutoff is reduced in accordance with the amount of the hydraulic fluid supplied from the accumulator (100), and a hydraulic pressure of an appropriate level is generated to the shift cylinder (78) without delay when the synchronizing operation of the synchromesh clutch (48) is started.

**Claims**

1. A hydraulic control circuit of a vehicular synchromesh transmission, including a plurality of synchromesh devices (48) provided for a plurality of pairs of gears having different gear ratios, respectively, and selectively engaged so as to establish a selected one of gear positions, and a hydraulic shift actuator (78) operable on a shift stroke to engage one of the synchromesh devices (48) that is in a non-engaged condition, after disengaging one of the synchromesh devices (48) that is in an engaged condition, into a neutral condition, **characterized by** comprising:

   a main control valve (94) operable to supply a hydraulic pressure to the hydraulic shift actuator (78) until one of said plurality of synchromesh devices (48) is disengaged and placed in a neutral condition, said main control valve (94) being adapted to shut off supply of the hydraulic pressure before engagement of one of the synchromesh devices (48) is started; and
   an accumulator (100) provided in a first oil channel (98) between the main control valve (94) and the hydraulic shift actuator (78) and operable to accumulate the hydraulic pressure supplied from the main control valve (94) while storing a specified amount of hydraulic fluid, said accumulator (100) being adapted to supply the stored hydraulic fluid to the hydraulic shift actuator (78) after the main control valve (94) shuts off the supply of the hydraulic pressure.

2. The hydraulic control circuit according to claim 1, **characterized in that**:

   the hydraulic shift actuator (78) is a double-acting hydraulic cylinder having a cylinder body (134), a piston (136) slidably fitted in the cylinder body (134), a rod (138) that is joined at one end to the piston (136) and protrudes from the cylinder body (134) to the outside, and first oil chamber (140) and second oil chamber (142) formed on opposite sides of the piston (136) within the cylinder body (134) such that a part of the rod (138) is located in the first oil chamber (140);
   a stroke sensor (104) is further provided for detecting an operating amount or operating position of the hydraulic cylinder; and
   the main control valve (94) shuts off supply of the hydraulic pressure to the hydraulic shift actuator (78) when the hydraulic shift actuator (78) is placed at a predetermined operating position, based on the operating amount or operating position detected by the stroke sensor (104).

3. The hydraulic control circuit according to claim 2, **characterized in that**:

   the first oil channel (98) is connected to a first oil chamber (140) of the hydraulic shift actuator (78);
   a second oil channel (144) that diverges from the first oil channel (98) is connected to a second oil chamber (142) of the hydraulic shift actuator (78);
   a switching control valve (148) is further provided in the second oil channel (144), said switching control valve (148) being placed in a selected one of a first position in which the second oil chamber (142) is connected to the first oil channel (98), a second position in which the second oil chamber (142) is disconnected from the first oil channel (98), and a third position in which the second oil chamber (142) is connected to a drain channel (90); and
   a first pressure-receiving area (Ab1) of one face of the piston (136) which faces the first oil chamber (140) is substantially equal to one half of a second pressure-receiving area (Ab2) of the other face of the piston (136) which faces the second oil chamber (142).

4. The hydraulic control circuit according to any one of claims 1 through 3, **characterized in that** the accumulator (100) is a spring loaded accumulator having a container-like main body, an accumulator piston (120) that is slidably fitted in the main body and forms a variable-volume oil chamber (118), and a spring (122) that exerts spring force on the accumulator piston (120) to bias the accumulator piston (120) toward the oil chamber (118).

5. The hydraulic control circuit according to claim 4, **characterized in that**:

each of said plurality of pairs of gears (46) comprises a first gear (66) mounted on one of two parallel shafts (42, 44) to be rotatable relative to said one of two parallel shafts, and a second gear mounted on the other of the two parallel shafts such that the second gear cannot rotate relative to the other of the two parallel shafts; each of said synchromesh devices (48) includes engaging teeth (67) comprising outer teeth formed integrally on the first gear (66), a hub (69) fixed to one of the two parallel shafts (42, 44), a cylindrical engaging sleeve (50) having inner teeth that mesh with outer teeth of the hub (69) and adapted to be operated by the hydraulic shift actuator (78) in an axial direction of said one of the two parallel shafts (42, 44), and a synchronizer ring (64) adapted to contact with the inner teeth of the engaging sleeve (50) so as to inhibit movement of the engaging sleeve (50) until a rotational speed of the engaging teeth (67) becomes equal to that of the engaging sleeve (50), during movement of the engaging sleeve (50) toward the engaging teeth (67); and the compliance that is represented by a value obtained by dividing the volume of the hydraulic fluid flowing into or out of the spring loaded accumulator (100) by a difference between pressures measured before and after the hydraulic fluid flows into or out of the accumulator (100) is set to a value obtained, upon shifting of the transmission, by dividing an amount of oil consumed from the time when the hydraulic shift actuator (78) is placed at a predetermined operating position to the time when a synchronizing operation is started, by a pressure difference between a first oil pressure supplied to the hydraulic shift actuator (78) when the shift actuator operates the engaging sleeve (50) so as to release the synchromesh device (48) that has been engaged to establish a gear position before the shifting, and a second oil pressure supplied to the hydraulic shift actuator (78) when the synchronizer ring (64) of the synchromesh device (48) associated with a gear position to be established after the shifting starts the synchronizing operation so as to engage the synchromesh device (48).

6. The hydraulic control circuit according to any one of claims 2, 3, 5 or 4 if dependent on claim 2 or 3, **characterized in that** the predetermined operating position is a position on a shift stroke of the synchromesh device (48) at which the synchromesh device (48) is disengaged and placed in a neutral condition.

## Patentansprüche

1. Hydraulischer Steuerungsschaltkreis eines Fahrzeugsynchronisierungsgetriebes, das eine Vielzahl von Synchronisierungsvorrichtungen (48), die jeweils für eine Vielzahl von Zahnradpaaren mit verschiedenen Übersetzungsverhältnissen vorgesehen sind und wahlweise im Eingriff sind, so dass sie eine ausgewählte Zahnradposition von Zahnradpositionen einrichten, und ein hydraulisches Schaltstellglied (78) umfasst, das auf einen Schaltschub betätigbar ist, um eine der Synchronisierungsvorrichtungen (48), die in einem nicht in Eingriff befindlichen Zustand ist, nachdem eine der Synchronisierungsvorrichtungen (48) freigegeben wird, die in einem Eingriffszustand ist, in einen neutralen Zustand einzugreifen, **gekennzeichnet durch** Aufweisen:

eines Hauptsteuerungsventils (94), das betätigbar ist, um einen Hydraulikdruck zu dem hydraulischen Schaltstellglied (78) zuzuführen, bis eine der Vielzahl von Synchronisierungsvorrichtungen (48) freigegeben und in einen neutralen Zustand gebracht ist, wobei das Hauptsteuerungsventil (94) angepasst ist, die Zufuhr des Hydraulikdrucks abzustellen, bevor ein Eingriff einer der Synchronisierungsvorrichtungen (48) begonnen hat; und eines Speichers (100), der in einem ersten Ölkanal (98) zwischen dem Hauptsteuerungsventil (94) und im hydraulischen Schaltstellglied (78) vorgesehen ist und betätigbar ist, um den von dem Hauptsteuerungsventil (94) zugeführten Hydraulikdruck zu speichern, während er eine bestimmte Menge an hydraulischem Fluid speichert, wobei der Speicher (100) angepasst ist, das gespeicherte hydraulische Fluid zu dem hydraulischen Schaltstellglied (78) zuzuführen, nachdem das Hauptsteuerungsventil (94) die Zufuhr des hydraulischen Drucks abstellt.

2. Hydraulischer Steuerungsschaltkreis nach Anspruch 1, **dadurch gekennzeichnet, dass**:

das hydraulische Schaltstellglied (78) ein zweifach wirkender hydraulischer Zylinder mit einem Zylinderkörper (134), einem Kolben (136), der verschiebbar in dem Zylinderkörper (143) eingebracht ist, einem Stab (138), der an einem Ende des Kolbens (136) verbunden ist und von dem Zylinderkörper (134) nach außen vorsteht, und einer ersten Ölkammer (140) und einer zweiten Ölkammer (142) ist, die an entgegengesetzten Seiten des Kolbens (136) innerhalb des Zylinderkörpers (134) ausgebildet sind, so dass sich ein Teil des Stabs (138) in der ersten Ölkammer (140) befindet;

ein Schubsensor (104) ferner vorgesehen ist, um einen Betriebsbetrag oder eine Betriebsposition des hydraulischen Zylinders zu erfassen; und

das Hauptsteuerungsventil (94) die Zufuhr des hydraulischen Drucks zu dem hydraulischen Schaltstellglied (78), wenn das hydraulische Schaltstellglied (78) an einer vorbestimmten Betriebsposition gestellt ist, auf der Grundlage des Betriebsbetrags oder der Betriebsposition, die von dem Schubsensor (104) erfasst sind, unterbricht.

3.  Hydraulischer Steuerungsschaltkreis nach Anspruch 2, **dadurch gekennzeichnet, dass**:

der erste Ölkanal (98) mit einer ersten Ölkammer (140) des hydraulischen Schaltstellglieds (78) verbunden ist;

ein zweiter Ölkanal (144), der sich von dem ersten Ölkanal (98) abtrennt, mit einer zweiten Ölkammer (142) des hydraulischen Schaltstellglieds (78) verbunden ist;

ein Schaltsteuerungsventil (148) ferner in dem zweiten Ölkanal (144) vorgesehen ist, wobei das Schaltsteuerungsventil (148) in einer ausgewählten von einer ersten Position, in der die zweite Ölkammer (142) mit dem ersten Ölkanal (98) verbunden ist, einer zweiten Position, in der die zweite Ölkammer (142) von dem ersten Ölkanal (98) getrennt ist, und einer dritten Position gestellt ist, in der die zweite Ölkammer (142) mit einem Ablasskanal (90) verbunden ist; und

eine erste Druckaufnahmefläche (Ab1) einer Seite des Kolbens (136), die der ersten Ölkammer (140) zugewandt ist, im Wesentlichen gleich einer Hälfte einer zweiten Druckaufnahmefläche (Ab2) der anderen Seite des Kolbens (136) ist, die der zweiten Ölkammer (142) zugewandt ist.

4.  Hydraulischer Steuerungskreislauf nach einem der Ansprüche 1 bis 3, **dadurch gekennzeichnet, dass** der Speicher (100) ein federgespannter Speicher mit einem containerähnlichen Hauptkörper, einem Speicherkolben (120), der verschiebbar in dem Hauptkörper eingebracht ist und eine bzgl. des Volumens variable Ölkammer (118) ausbildet, und einer Feder (122) ist, die eine Federkraft auf den Speicherkolben (120) ausübt, um den Speicherkolben (120) in Richtung der Ölkammer (118) vorzuspannen.

5.  Hydraulischer Steuerungskreislauf nach Anspruch 4, **dadurch gekennzeichnet, dass**:

jedes der Vielzahl von Zahnradpaaren (46) ein erstes Zahnrad (66), das an einer von zwei parallelen Wellen (42, 44) montiert ist, um relativ zu der einen der zwei parallelen Wellen drehbar zu sein, und ein zweites Zahnrad aufweist, das an der anderen der zwei parallelen Wellen montiert ist, so dass das zweite Zahnrad nicht relativ zu der anderen der zwei parallelen Wellen rotieren kann;

jede der Synchronisierungsvorrichtungen (48) Eingriffszähne (67), die einstückig an dem ersten Zahnrad (66) ausgebildete äußere Zähne darstellen, einen Hub (69), der an einer der zwei parallelen Wellen (42, 44) befestigt ist, eine zylindrische Eingriffshülse (50), die Innenzähne hat, die in äußere Zähne des Hubs (69) eingreifen, und angepasst ist, von dem hydraulischen Schaltstellglied (78) in einer axialen Richtung der einen von den zwei parallelen Wellen (42, 44) betätigt zu werden, und einen Synchronisierungsring (64) umfasst, der angepasst ist, die Innenzähne der Eingriffshülse (50) zu berühren, so dass er eine Bewegung der Eingriffshülse (50) unterbindet, bis eine Drehgeschwindigkeit der Eingriffszähne (67) gleich der der Eingriffshülse (50) wird, während einer Bewegung der Eingriffshülse (50) in Richtung der Eingriffszähne (67); und

die Übereinstimmung, die durch einen Wert ausgedrückt wird, der durch Teilen des in den oder aus dem federgespannten Speicher (100) strömenden Hydraulikfluidvolumens durch eine Differenz zwischen Drücken erhalten wird, die bevor und nachdem das Hydraulikfluid in den oder aus dem Speicher (100) strömt gemessen werden, in Folge eines Schaltens des Getriebes auf einen Wert festgesetzt wird, der durch Teilen einer von der Zeit, wenn das hydraulische Schaltstellglied (78) an einer vorbestimmten Betriebsposition gestellt wird, bis zu der Zeit konsumierten Ölmenge, wenn eine Synchronisierungsbetätigung gestartet ist, durch eine Druckdifferenz zwischen einem ersten Öldruck, der zu dem hydraulischen Schaltstellglied (78) zugeführt wird, wenn das Schaltstellglied die Eingriffshülse (50) betätigt, um so das Synchronisierungsvorrichtung (48) freizugeben, das vor dem Schalten im Eingriff gewesen ist, um eine Zahnradposition einzurichten, und einem zweiten Öldruck, der dem hydraulischen Schaltstellglied (78) zugeführt wird, wenn der Synchronisierungsring (64) der Synchronisierungsvorrichtung (48), die mit einer Zahnradposition assoziiert wird, die nach dem Schalten eingerichtet wird, die Synchronisierungsbetätigung startet, um so die Synchronisierungsvorrichtung (48) in Eingriff zu nehmen.

6.  Hydraulischer Steuerungskreislauf nach einem der Ansprüche 2, 3, 5 oder 4, falls abhängig von Anspruch 2 oder 3, **dadurch gekennzeichnet, dass** die vorbestimmte Betriebsposition eine Position auf einem Schaltschub der Synchronisierungsvorrichtung (48) ist, an der die Synchronisierungsvorrichtung (48) freigegeben und in einem neutralen Zustand gestellt ist.

**Revendications**

1. Circuit de commande hydraulique d'une boîte de vitesses synchronisée pour véhicule, comportant une pluralité de synchroniseurs (48) fournis pour une pluralité de paires d'engrenages ayant différents rapports de vitesse, respectivement, et engagés sélectivement de façon à établir une position choisie des positions d'engrenage, et un actionneur de changement de vitesse hydraulique (78) pouvant fonctionner sur une course de changement de vitesse pour s'engager avec l'un des synchroniseurs (48) qui est dans un état non engagé, après le désengagement de l'un des synchroniseurs (48) qui est dans un état engagé, à un état de point mort, **caractérisé en ce qu'**il comprend :

   une soupape de commande principale (94) utilisable pour fournir une pression hydraulique à l'actionneur de changement de vitesse hydraulique (78) jusqu'à ce que l'un de ladite pluralité de synchroniseurs (48) soit mis hors service et placé dans un état de point mort, ladite soupape de commande principale (94) étant adaptée pour arrêter l'alimentation en pression hydraulique avant qu'un engagement de l'un des synchroniseurs (48) ne soit lancé ; et

   un accumulateur (100) fourni dans une première canalisation d'huile (98) entre la soupape de commande principale (94) et l'actionneur de changement de vitesse hydraulique (78) et utilisable pour accumuler la pression hydraulique fournie à partir de la soupape de commande principale (94) tout en stockant une quantité spécifique d'un fluide hydraulique, ledit accumulateur (100) étant adapté pour fournir le fluide hydraulique stocké à l'actionneur de changement de vitesse hydraulique (78) après que la soupape de commande principale (94) a arrêté l'alimentation en pression hydraulique.

2. Circuit de commande hydraulique selon la revendication 1, **caractérisé en ce que** :

   l'actionneur de changement de vitesse hydraulique (78) est un cylindre hydraulique à double effet ayant un corps de cylindre (134), un piston (136) agencé de manière coulissante dans le corps de cylindre (134), une tige (138) qui est liée en une extrémité au piston (136) et fait saillie à partir du corps de cylindre (134) vers l'extérieur, et une première chambre d'huile (140) et une deuxième chambre d'huile (142) formées sur des côtés opposés du piston (136) dans le corps de cylindre (134) de sorte qu'une partie de la tige (138) soit située dans la première chambre d'huile (140) ;
   un capteur de course (104) est fourni en outre pour détecter une quantité de fonctionnement ou une position de fonctionnement du cylindre hydraulique ; et
   la soupape de commande principale (94) arrête de fournir de la pression hydraulique à l'actionneur de changement de vitesse hydraulique (78) lorsque l'actionneur de changement de vitesse hydraulique (78) est placé dans une position de fonctionnement prédéterminée, sur la base de la quantité de fonctionnement ou d'une position de fonctionnement détectée par le capteur de course (104).

3. Circuit de commande hydraulique selon la revendication 2, **caractérisé en ce que** :

   la première canalisation d'huile (98) est reliée à une première chambre d'huile (140) de l'actionneur de changement de vitesse hydraulique (78) ;
   une deuxième canalisation d'huile (144) qui diverge de la première canalisation d'huile (98) est reliée à une deuxième chambre d'huile (142) de l'actionneur de changement de vitesse hydraulique (78) ;
   une soupape de commande de commutation (148) est prévue en outre dans la deuxième canalisation d'huile (144), ladite soupape de commande de commutation (148) étant placée dans une position choisie d'une première position dans laquelle la deuxième chambre d'huile (142) est reliée à la première canalisation d'huile (98), une deuxième position dans laquelle la deuxième chambre d'huile (142) est déconnectée de la première canalisation d'huile (98), et une troisième position dans laquelle la deuxième chambre d'huile (142) est reliée à un canal de drainage (90) ; et
   une première zone de réception de pression (Ab1) d'une face du piston (136), qui fait face à la première chambre d'huile (140) est essentiellement égale à une moitié d'une deuxième zone de réception de pression (Ab2) de l'autre face du piston (136) qui fait face à la deuxième chambre d'huile (142).

4. Circuit de commande hydraulique selon l'une quelconque des revendications 1 à 3, **caractérisé en ce que** l'accumulateur (100) est un accumulateur à ressort ayant un corps principal en forme de conteneur, un piston d'accumulateur (120) qui est ajusté de manière coulissante dans le corps principal et forme une chambre d'huile à volume variable (118), et un ressort (122) qui exerce une force de ressort sur le piston d'accumulateur (120) pour pousser le piston d'accumulateur (120) vers la chambre d'huile (118).

5. Circuit de commande hydraulique selon la revendication 4, **caractérisé en ce que** :

chacune de ladite pluralité de paires d'engrenages (46) comprend un premier engrenage (66) monté sur l'un de deux arbres parallèles (42, 44) pour pouvoir tourner par rapport audit arbre des deux arbres parallèles, et un deuxième engrenage monté sur l'autre arbre des deux arbres parallèles de sorte que le deuxième engrenage ne puisse pas tourner par rapport à l'autre arbre des deux arbres parallèles ;

chacun desdits synchroniseurs (48) comporte des dents engrenées (67) comprenant des dents extérieures formées intégralement sur le premier engrenage (66), un moyeu (69) fixé à l'un des deux arbres parallèles (42, 44), un manchon cylindrique d'engagement (50) ayant des dents intérieures qui s'engrènent avec des dents extérieures du moyeu (69) et adapté pour être actionné par l'actionneur de changement de vitesse hydraulique (78) dans une direction axiale dudit l'un des deux arbres parallèles (42, 44), et une bague de synchroniseur (64) adaptée pour être mise en contact avec les dents intérieures du manchon d'engagement (50) afin d'empêcher le déplacement du manchon d'engagement (50),jusqu'à ce qu'une vitesse de rotation des dents engrenées (67) devienne égale à celle du manchon d'engagement (50), durant le déplacement du manchon d'engagement (50) vers les dents engrenées (67) ; et

l'élasticité qui est représentée par une valeur obtenue en divisant le volume du fluide hydraulique qui s'écoule à l'intérieur ou à l'extérieur de l'accumulateur à ressort (100) par une différence entre les pressions mesurées avant et après l'écoulement du fluide hydraulique à l'intérieur ou à l'extérieur de l'accumulateur (100) est réglée à une valeur obtenue, lors du changement de vitesse de la boîte de vitesses, en divisant une quantité d'huile consommée depuis le moment où l'actionneur de changement de vitesse hydraulique (78) est placé dans une position de fonctionnement prédéterminée au moment où une opération de synchronisation est lancée, par une différence de pressions entre une première pression d'huile fournie à l'actionneur de changement de vitesse hydraulique (78) lorsque l'actionneur de changement de vitesse fait actionner le manchon d'engagement (50) afin de relâcher le synchroniseur (48) qui a été engagé pour établir une position d'engrenage avant que la vitesse ne soit changée, et une deuxième pression d'huile fournie à l'actionneur de changement de vitesse hydraulique (78) lorsque la bague de synchroniseur (64) du synchroniseur (48) associée à une position d'engrenage à établir après que le changement de vitesse a lancé l'opération de synchronisation afin de mettre en prise le synchroniseur (48).

6. Circuit de commande hydraulique selon l'une quelconque des revendications 2, 3, 5 ou 4 en cas de dépendance à la revendication 2 ou 3 **caractérisé en ce que** la position de fonctionnement prédéterminée est une position sur une course de changement de vitesse du synchroniseur (48) à laquelle le synchroniseur (48) est mis hors service et placé dans un état de point mort.

# F I G . 1

# F I G . 2

# FIG.3A

# FIG.3B

# F I G . 4A

# F I G . 4B

# FIG. 5

# FIG.6

# F I G . 7

# FIG.8

# FIG.9

SHUTOFF OF
MAIN CONTROL
VALVE

SHIFT
REQUEST

NEUTRAL
DETECTED

START OF
PRESSING SNR

START OF
RELEASE OF
ENGAGED
CLUTCH

START OF
ENGAGEMENT

ENGAGEMENT
COMPLETED

SHIFTING
COMPLETED

SELECTOR CYLINDER STROKE

FIRST SELECT POSITION

SECOND SELECT POSITION

SHIFT CYLINDER STROKE

SECOND SHIFT POSITION

NEUTRAL POSITION

$y$

BALK POSITION

FIRST SHIFT POSITION

MASTER PRESSURE $Pm$

Pm1

$\Delta P$

Pm2

t1    t2    t3 t4 t5    t6 t7 t8    TIME

EP 2 080 937 B1

**EP 2 080 937 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004293704 A